Europäisches Patentamt

European Patent Office

Office européen des brevets

(11) Veröffentlichungsnummer : **0 089 628**
**B1**

(12) **EUROPÄISCHE PATENTSCHRIFT**

(45) Veröffentlichungstag der Patentschrift :
06.05.87

(21) Anmeldenummer : 83102645.5

(22) Anmeldetag : 17.03.83

(51) Int. Cl.⁴ : **A 01 D 67/00**, A 01 D 41/02

(54) **Mähdrescher.**

(30) Priorität : 19.03.82 US 360022

(43) Veröffentlichungstag der Anmeldung :
28.09.83 Patentblatt 83/39

(45) Bekanntmachung des Hinweises auf die Patenterteilung : 06.05.87 Patentblatt 87/19

(84) Benannte Vertragsstaaten :
DE FR GB

(56) Entgegenhaltungen :
US-A- 4 097 060
US-A- 4 317 326

(73) Patentinhaber : **DEERE & COMPANY**
**1 John Deere Road**
**Moline Illinois 61265 (US)**

(72) Erfinder : **Allen, James Robert**
**1357 Pineacre Avenue**
**Bettendorf Iowa 52722 (US)**
Erfinder : **Myers, Christopher Allen**
**3728, 10th Ave. Ct.**
**Moline Illinois 61265 (US)**

(74) Vertreter : **Sartorius, Peter et al**
**DEERE & COMPANY European Office, Patent Depart-**
**ment Postfach 503 Steubenstrasse 36-42**
**D-6800 Mannheim 1 (DE)**

EP 0 089 628 B1

## Beschreibung

Die Erfindung bezieht sich auf einen Mähdrescher mit zwei über eine Gelenkeinrichtung zur Lenkung des Mähdreschers um mindestens eine in etwa aufrechtstehende und eine horizontal verlaufende Achse schwenkbaren und jeweils auf einem Laufradpaar abgestützten Dresch- und Trenneinheiten sowie einen Sammelbehälter aufweisenden Rahmeneinheiten, wobei die Gelenkeinrichtung aus einer die beiden Rahmeneinheiten miteinander verbindenden unteren Anhängevorrichtung, einem oberen Lenker sowie mindestens zwei zwischen den Rahmeneinheiten wirkenden Lenkzylindern besteht, die einenends mit Abstand zueinander an die eine Rahmeneinheit gelenkig angeschlossen sind.

Es ist bereits ein Mähdrescher obiger Gattung bekannt (US-PS 4 317 326), bei dem die beiden Rahmeneinheiten über eine sich in Längsrichtung erstreckende untere Anhängevorrichtung und über einen oberen Lenker miteinander gelenkig verbunden sind. Beiderseits der Anhängevorrichtung sind zwei Lenkzylinder vorgesehen, die mit ihren vorderen Enden mit Abstand an der vorderen Rahmeneinheit angeschlossen sind, während die hinteren Enden der Lenkzylinder an einer an der Anhängevorrichtung vorgesehenen Halterung befestigt sind. Die an der Anhängevorrichtung vorgesehenen Anschlußstellen der beiden Lenkzylinder sind ebenfalls mit Abstand zueinander angeordnet. Bei einem Lenkeinschlag der einen Rahmeneinheit gegenüber der anderen Mähdreschereinheit werden in jedem Fall die Hydraulikzylinder ein- bzw. ausgefahren, auch dann, wenn keine Druckbeaufschlagung der Hydraulikzylinder erfolgt, so daß für die Hydraulikzylinder eine zusätzliche Steuervorrichtung zur Druckmittelregelung notwendig ist, um eine Beschädigung der Hydraulikzylinder zu vermeiden.

Demgemäß besteht die Erfindungsaufgabe darin, die Gelenkeinrichtung und die zugehörigen Lenkzylinder derart auszubilden und anzuschließen, daß bei einem Schwenkvorgang der einen Rahmeneinheit gegenüber der anderen Rahmeneinheit die Lenkzylinder im wesentlichen unbeeinflußt bleiben. Diese Aufgabe wird dadurch gelöst, daß die Lenkzylinder V-förmig zueinander verlaufend angeordnet und anderenends derart an die andere Rahmeneinheit angeschlossen sind, daß ihre Anschlußstellen ein derart ausgebildetes gemeinsames Gelenk mit einem Gelenkmittelpunkt bilden, daß es von den Längsmittelachsen der Lenkzylinder geschnitten wird.

Durch den vorteilhaften Anschluß der Anhängevorrichtung an die eine Rahmeneinheit und den vorteilhaften Anschluß der beiden Lenkzylinder an eine gemeinsame Anschlußstelle an die andere Rahmeneinheit, ist auch eine Verschwenkung der einen Rahmeneinheit gegenüber der anderen Rahmeneinheit um eine in etwa horizontal verlaufende Achse möglich, ohne daß dabei die Lenkzylinder in irgend einer Weise beeinflußt werden, so daß auf zusätzliche Steuerorgane zur Steuerung der Lenkzylinder für diesen Fall verzichtet werden kann. Hierzu ist es gemäß der Erfindung vorteilhaft, daß das gemeinsame Gelenk der Lenkzylinder an der hinteren Rahmeneinheit als ein oszillierende Bewegungen zwischen der vorderen und der hinteren Rahmeneinheit zulassendes, den Lenkungsvorgang der Lenkzylinder bei dieser Bewegungsart nicht beeinflussendes räumliches Gelenk ausgebildet ist. Durch die Verwendung eines räumlichen Gelenkes, läßt sich die eine Rahmeneinheit gegenüber der anderen Rahmeneinheit auf einfache Weise um zwei sich kreuzende Achsen verstellen, so daß der Mähdrescher auch mit seinen beiden über die Gelenkvorrichtung verbundenen Rahmeneinheiten auf unebenem Gelände ohne weiteres eingesetzt werden kann. Hierzu ist es in weiterer Ausgestaltung der Erfindung vorteilhaft, daß die Gelenkeinrichtung den die beiden Rahmeneinheiten miteinander verbindenden, zumindest eine Relativbewegung zwischen den oberen Teilen der Rahmeneinheiten zulassenden oberen Lenker und eine mit Abstand dazu angeordnete, untere, ein räumliches Gelenk aufweisende Anhängevorrichtung und die beiden V-förmig angeordneten Lenkzylinder aufweist, deren Anschlußelemente an der vorderen Mähdreschereinheit ebenfalls räumliche Gelenke aufweisen, die jeweils einen Gelenkmittelpunkt haben, wobei diese beiden Gelenkmittelpunkte und der Gelenkmittelpunkt des vorderen Teils der Anhängevorrichtung auf einer gemeinsamen Querebene liegen, durch die eine horizontale Knicklenkerachse derart verläuft, daß bei gegenseitiger Verschwenkung der beiden Mähdreschereinheiten um diese Knicklenkerachse die Lenkzylinder beeinflußt bzw. ein- oder ausgefahren werden. Durch die Verwendung der räumlichen Gelenke zum Anschluß der Lenkzylinder und des oberen Lenkers an die Rahmeneinheiten ist ohne weiteres eine Querneigung der hinteren Rahmeneinheit gegenüber der vorderen Rahmeneinheit auf einfache Weise möglich. Ferner kann auch bei einer Querneigung der hinteren Rahmeneinheit gegenüber der vorderen Rahmeneinheit ein Lenkvorgang des Mähdreschers ohne weiteres durchgeführt werden, da hierzu die hintere Rahmeneinheit um die querverlaufende Knicklenkerachse dreht bzw. schwenkt.

Durch die Verwendung eines der Gelenkeinrichtung zugeordneten Rückstellzylinders, der über Kugelgelenke einenends an die Anhängevorrichtung und anderenends an einen Rahmenteil der vorderen Rahmeneinheit gelenkig angeschlossen ist, kann der Lenkausschlag ohne weiteres verfolgt werden und eine Rückführung der Anhängevorrichtung in ihre Mittellage erleichtert werden.

Vorteilhaft ist es ferner, daß die räumlichen Gelenke der Lenkzylinder zur Verbindung der Rahmeneinheiten als Kugelgelenke oder als Kardangelenke mit je einem Gelenkmittelpunkt ausgebildet sind, die mit Abstand zum Gelenkmittelpunkt der Anhängevorrichtung angeordnet sind und auf einer horizontalen Schwenkachse bzw. einer Knicklenkerachse liegen. Nach einem weiteren Merkmal der Erfindung ist es vorteilhaft, daß die Anschlußstelle der Lenkzylinder an der hinteren Rahmeneinheit unterhalb der Anschlußstellen der Lenkzylinder an der vorderen Rahmeneinheit vorgesehen sind und die durch die Lenkzylinder verlaufenden Längsachsen auf einer nach hinten geneigt verlaufenden Ebene liegen, und daß die durch die Längsachsen der Lenkzylinder geneigt verlaufende Ebene die Laufräder der hinteren Rahmeneinheit im Bereich der Bodenberührungsstelle der zugehörigen Laufräder schneidet. Normalerweise werden bei horizontal verlaufender Schwenkachse, bei einseitiger Belastung des Mähdreschers und auf unebenem Gelände größere Zug- und Druckkräfte auf die Gelenkvorrichtung übertragen. Dieser Effekt kann durch Verlegung der Schwenkachse in eine schrägverlaufende Ebene reduziert werden. Dabei ist es vorteilhaft, daß das gemeinsame Gelenk der beiden Lenkzylinder an der hinteren Rahmeneinheit als ein zumindest teilweise eine allseitige Bewegung zulassendes räumliches Gelenk ausgebildet ist, dessen Gelenkmittelpunkt auf der gleichen Längsmittelachse liegt wie' der Gelenkmittelpunkt der Anhängevorrichtung, wobei die Längsmittelachse eine annähernd horizontale Schwenkachse für die vordere bzw. die hintere Mähdreschereinheit bildet.

In weiterer Ausgestaltung der Erfindung ist es vorteilhaft, daß das gemeinsame Gelenk der beiden Lenkzylinder am Querträger der hinteren Rahmeneinheit als Kugelgelenk ausgebildet ist und von zwei zusammenfügbaren Lagerschalenhälften umgeben wird, die in einer Bohrung eines Lagerringes aufgenommen sind, dessen Bohrungsachse koaxial zu einer Bohrung eines Gabelgelenkes und rechtwinklig zu den Längsachsen der Lenkzylinder verläuft. Vorteilhaft ist es ferner, daß das Gabelgelenk an dem einen Lenkzylinder und der Lagerring an dem anderen Lenkzylinder lösbar angeschlossen ist, und daß das Gabelgelenk aus zwei mit Abstand zueinander angeordneten, koaxial zueinander verlaufenden, Bohrungen aufweisenden Lagerringen besteht, in deren Zwischenraum der Lagerring konzentrisch aufgenommen ist, wobei die Bohrungen der Lagerringe etwas größer sind als die eine Bohrung des in den Zwischenraum einschiebbaren Lagerringes. Ferner ist es vorteilhaft, daß zwei je einen zylindrischen Ansatz aufweisende Arretierungsringe in die beiden Bohrungen des im Zwischenraum des Gabelgelenkes aufgenommenen Lagerringes einsetzbar und über Schraubenbolzen miteinander verbindbar sind. In weiterer Ausgestaltung der Erfindung ist es vorteilhaft, daß die Anhängevorrichtung aus zwei nach hinten divergierend verlaufenden Trägern besteht, die einenends am Querträger der hinteren Rahmeneinheit starr angeschlossen sind und anderenends an ihrem vorderen, zusammenlaufenden Ende eine Deichsel zur Aufnahme eines ein Kugelgelenk aufweisenden Kupplungsbolzens aufweisen, der an einem Rahmteil der vorderen

Rahmeneinheit angeschlossen ist, wobei die nach hinten zusammenlaufenden Lenkzylinder sich durch in den Trägern vorgesehene Langlochöffnungen erstrecken. Die vorteilhafte Ausbildung und Anordnung des hinteren Anschlußteiles der beiden zusammenlaufenden Lenkzylinder gewährleistet ohne weiteres eine Verschwenkung der hinteren Rahmeneinheit gegenüber der vorderen Rahmeneinheit um eine horizontal verlaufende Achse und bei Betätigung eines Lenkzylinders einen Lenkausschlag, ohne daß dabei die Lenkzylinder mit der Anhängevorrichtung kollidieren. Durch die vorteilhafte Ausbildung der Gelenkvorrichtung ist also neben einer präzisen Lenkung des Mähdreschers eine Verschwenkung der einen Rahmeneinheit gegenüber der anderen Rahmeneinheit um mindestens zwei Achsen ohne weiteres möglich. Gleichzeitig werden die auf die Lenkzylinder bzw. auf die Anschlußstellen der Lenkzylinder und der Anhängevorrichtung einwirkenden Kräfte auf ein Minimum reduziert.

In der Zeichnung sind zwei Ausführungsbeispiele von zwischen zwei Rahmeneinheiten eines Mähdreschers vorgesehenen Gelenkverbindungen nach der Erfindung schematisch dargestellt. Es zeigt :

Figur 1 einen Mähdrescher in Seitenansicht, der aus zwei Rahmeneinheiten besteht, die über Lenker und Anhängevorrichtung miteinander verbunden sind ;

Figur 2 einen Teilschnitt durch die untere Anhängevorrichtung zur Verbindung der vorderen und hintere Rahmeneinheit ;

Figur 3 ein anderes Ausführungsbeispiel einer Gelenkverbindung zwischen der vorderen und hinteren Rahmeneinheit ;

Figur 4 eine perspektivische Darstellung der Anhängevorrichtung mit den zugehörigen Lenkzylindern ;

Figur 5 die einzelnen Gelenkteile zum Zusammenschluß der Lenkzylinder an einen Querrahmen ;

Figur 6 einen Schnitt entlang der Linie 6-6 gemäß Fig. 4.

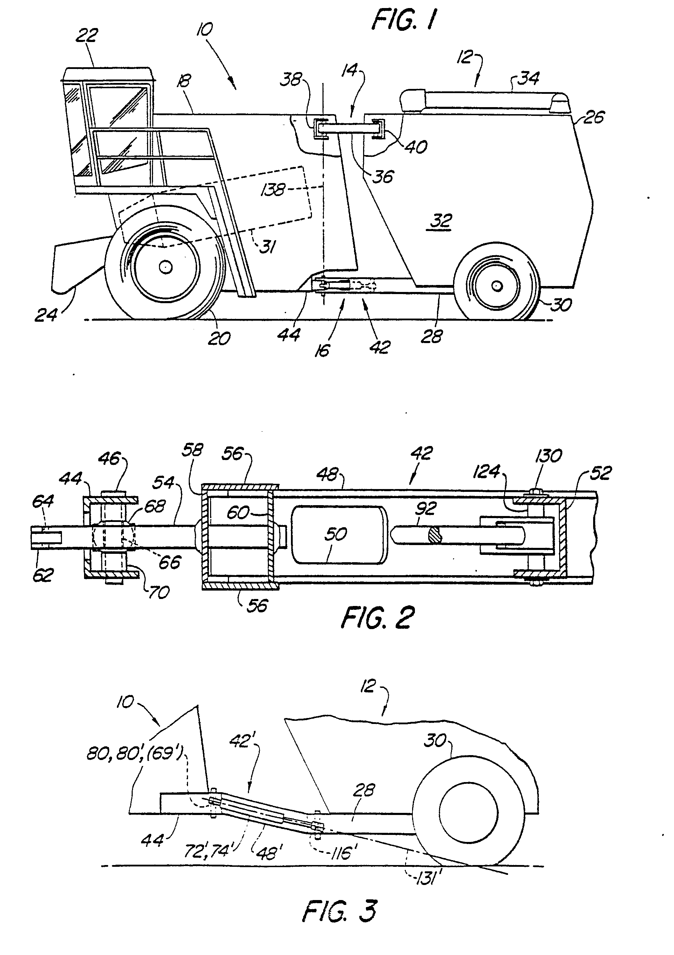

In der Zeichnung ist in Fig. 1 ein Mähdrescher dargestellt, der aus einer vorderen Mähdreschereinheit 10 und einer hinteren Mähdreschereinheit 12 besteht, die über eine obere Gelenkrahmenkonstruktion 14 und eine untere Gelenkrahmenkonstruktion 16 miteinander verbunden sind. Die vordere Mähdreschereinheit 10 weist ein Gehäuse 18 auf, das auf zwei mit Abstand zueinander angeordneten, antreibbaren Laufrädern 20 abstützbar ist. Im vorderen oberen Bereich des Gehäuses 18 befindet sich eine Fahrerkabine 22, unter der sich ein am Gehäuse 18 angeschlossenes Schrägfördergehäuse 24 befindet, das zum Anschluß einer in der Zeichnung nicht dargestellten Erntebergungsvorrichtung dient. Die hintere Mähdreschereinheit 12 weist ebenfalls ein Gehäuse 26 auf, zu dem ein Hauptrahmen bzw. eine Rahmeneinheit 28 gehört, die sich ebenfalls auf zwei mit Abstand zueinander angeordneten Laufrädern 30 abstützt.

Das Erntegut wird über die Erntebergungsvorrichtung aufgenommen und zumindest teilweise in der vorderen Mähdreschereinheit 10 von einer sich in Axialrichtung erstreckenden Dresch- und Trennvorrichtung 31 bearbeitet. Das ausgeschiedene und bereits gereinigte Erntegut wird über in der Zeichnung nicht dargestellte Förderelemente einem Sammelbehälter 32 zugeführt, der den größten Anteil der hinteren Mähdreschereinheit 12 ausmacht. Das im Sammelbehälter 32 aufgenommene Erntegut kann über eine Förderschnecken aufweisende Entleerungsvorrichtung 34 entladen werden.

Die obere Gelenkrahmenkonstruktion 14 zur Verbindung der beiden Mähdreschereinheiten 12 und 14 kann beliebig ausgebildet sein, jedoch so, daß eine Relativbewegung zwischen den beiden Mähdreschereinheiten 12 und 14 möglich ist. Im Ausführungsbeispiel gemäß Fig. 1 ist ein relativ einfacher Lenker 36 dargestellt, der endseitig die Rahmenteile 38 und 40 der vorderen und hinteren Mähdreschereinheit 10, 12 gelenkig miteinander verbindet.

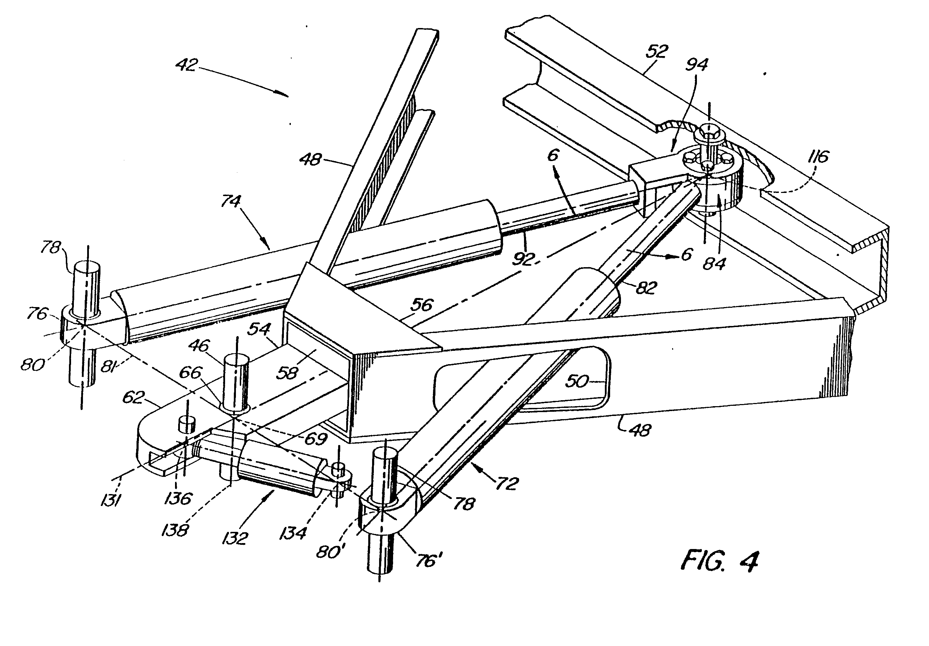

Die untere Gelenkrahmenkonstruktion 16 geht am besten aus den Fig. 2 und 4 hervor. Die Gelenkrahmenkonstruktion 14 weist eine sich nach vorne erstreckende Anhängevorrichtung 42 auf, die an einen unteren Rahmenteil bzw. eine Rahmeneinheit 44 der vorderen Mähdreschereinheit 10 mittels eines Kupplungsbolzens 46 angeschlossen ist. Die Anhängevorrichtung 42 besteht aus einem A-förmig ausgebildeten Rahmen mit nach vorne zusammenlaufenden Trägern 48, die mit je einer rechteckförmigen Durchdringung 50 im Bereich ihres vorderen Endes versehen sind und mit ihrem entsprechenden hinteren Ende an den Hauptrahmen 28 der hinteren Mähdreschereinheit 12 angeschlossen sind. Zwischen den beiden Enden der Träger 48 erstreckt sich ein Querträger 52.

An der Stelle, an der die beiden Träger 48 zusammenlaufen, ist eine Deichsel 54 mittels einer Schweißkonstruktion angeschlossen, die aus oberen und unteren Platten 56 sowie einer vorderen und einer hinteren Platte 58 und 60 besteht. Das vordere Ende 62 der Deichsel 54 ist als Kupplungslasche ausgebildet, in der eine Bohrung 64 zur Aufnahme eines Bolzens eines Rückstellzylinders 132 vorgesehen ist. Hinter der Bohrung 64 befindet sich ebenfalls auf der Längsmittelebene der Deichsel 54 in einem Kugelgelenk 68 eine Bohrung 66 (Fig. 2) zur Aufnahme des Bolzens 46. Das Kugelgelenk 68 ist in der Deichsel 54 entsprechend gesichert. Der Mittelpunkt des Kugelgelenkes 68 bildet auch den Gelenkmittelpunkt der Anhängevorrichtung 42. Wie aus Fig. 2 hervorgeht, befinden sich oberhalb und unterhalb des Kugelgelenkes 68 Distanzhülsen 70, durch die sich der Kupplungsbolzen 46 erstreckt, der mit seinen beiden Enden in Bohrungen von parallel zueinander verlaufenden Flanschen des Rahmenteils 44 aufgenommen ist.

Die Anhängevorrichtung 42 ist ferner mit linken und rechten Lenkzylindern 72 und 74 ausgestattet, die an ihren zylinderkopfseitigen Enden Kupplungsösen 76 und 76' mit allseitig gesicherten Kugelgelenken zur Aufnahme je eines Kupplungsbolzens 78 (Fig. 4) aufweisen. Die Kupplungsbolzen 78 tragen ebenfalls, ähnlich wie der Kupplungsbolzen 46, in der Zeichnung nicht dargestellte Distanzhülsen und dienen zum Anschluß der Lenkzylinder 72 und 74 an das Rahmenteil 44 der vorderen Mähdreschereinheit 10. Die Distanzhülsen auf dem entsprechenden Kupplungsbolzen 78, ähnlich wie auf dem Kupplungsbolzen 46, sind so angeordnet, daß die Gelenkmittelpunkte 80, 80' der Kugelgelenke in den Kupplungsösen 76 der Lenkzylinder 72 und 74 auf einer Ebene und mit gleichem Abstand zum Gelenkmittelpunkt 69 des Kugelgelenkes 68 angeordnet sind (Fig. 4); Die Verbindungslinie durch die Gelenkmittelpunkte 69, 80, 80' bilden eine Querachse bzw. Knicklenkerachse 81.

Der gemeinsame Anschluß der Enden der Kolbenstangen 82 und 92, der Lenkzylinder 72 und 74 ist in Fig. 4 bis 6 veranschaulicht. Die Kolbenstange 82 des linken Lenkzylinders 72 ist mit einem Gewinde versehen, das in eine Gewindebohrung 88 eines Anschlußelementes bzw. Lagerringes 84 eingeschraubt ist. Das Anschlußelement 84 weist eine zylindrische Bohrung 86 auf, deren Achse rechtwinklig zur Längsachse des Längszylinders 72 verläuft. In dem Anschlußelement 84 befinden sich vier einen gleichmäßigen Abstand untereinander aufweisende Bohrungen 90, deren Achsen parallel zur Achse der Bohrung 86 verlaufen. Am Ende der Kolbenstange 92 des rechten Lenkzylinders 74 ist ebenfalls ein Gewinde vorgesehen, das in eine Gewindebohrung 104 einer Anschlußgabel 102 eingeschraubt ist, die Bestandteil eines gemeinsamen Anschlußelementes bzw. Gabelgelenkes 94 ist. Die Anschlußgabel 102 ist ferner aus zwei mit Abstand zueinander angeordneten koaxial verlaufenden Lagerringen 98 gebildet, die mit je einer koaxial verlaufenden, zylindrischen Bohrung 100 versehen sind. Die beiden Lagerringe 98 bilden untereinander einen Spalt 96.

Die Lenkzylinder 72 und 74 werden auf folgende Weise mit der hinteren Mähdreschereinheit 12 verbunden. Die beiden Enden der Kolbenstangen 82 und 92 werden zusammengeführt, wobei das Anschlußelement 84 in den Spalt 96 so eingeführt wird, daß die beiden zylindrischen Bohrungen 86 und 100 konzentrisch zueinander verlaufen. Danach wird ein Gelenkstück 106 mit zwei Lagerschalenhälften 108, die ein räumliches Gelenk bzw. Kugelgelenk 110 mit einem Bolzen 122 umgeben, in die Bohrung 86 des im Spalt 96 aufgenommenen Anschlußelementes 84 eingeführt. Ein räumliches Gelenk ist ein Gelenk, das mehrere Freiheitsgrade besitzt und zum Beispiel als Kugelgelenk oder als Kardangelenk ausgebildet sein kann.

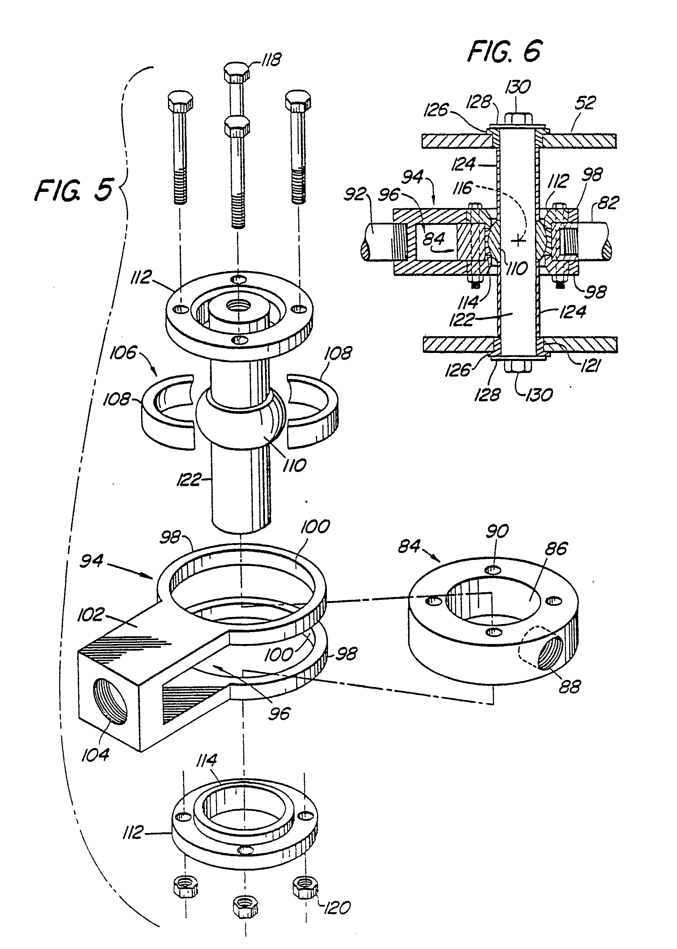

Anschließend werden Arretierungsringe 112 mit entprechenden ringförmigen Ansätzen 114 von oben und unten in die Bohrungen 100 der Lagerringe 98 so eingesetzt, daß sie bündig mit der Oberfläche der Anschlußgabel 102 abschließen (Fig. 6). Die Ansätze 114 greifen dabei in die Bohrung 86 des Anschlußelementes 84 ein, um somit die beiden Lagerschalenhälften 108 und das Kugelgelenk 110 so auszurichten, daß der Mittelpunkt des Kugelgelenkes 110 auf der gleichen Ebene liegt wie die Längsachsen der Lenkzylinder 72 und 74. Der Schnittpunkt der Langsachsen der Lenkzylinder 72, 74 sowie der Mittelpunkt des Kugelgelenkes 110 bilden einen gemeinsamen Gelenkmittelpunkt 116. Die Arretierungsringe 112 der Kolbenstangen 82 und 92 sind ferner mittels Muttern 120 und Schraubenbolzen 118 gesichert, die durch entsprechende Bohrungen in den Arretierungsringen 112 und durch die Bohrungen 90 gesteckt sind. Zur Gelenkverbindung der Lenkzylinder 72 und 74 an die hintere Mähdreschereinheit 12 gehört ferner je eine Bohrung 121 in den Schenkeln des Querträgers 52 (Fig. 6), die zur Aufnahme eines Bolzens 122 dient, auf dem Distanzhülsen 124, Einsatzbuchsen 126 und Unterlagsscheiben 128 angeordnet sind. Die Unterlagsscheiben 128 liegen gegen die außenliegenden Stirnseiten der Einsatzbuchsen 126 an und sind mittels Schraubenbolzen 130 gesichert, die beiderseits in die Gewindebohrungen der Bolzen 122 eingeschraubt sind.

Durch diese Verbindungsart bildet die durch die Gelenkpunkte 69, 116 verlaufende Längsachse der Anhängevorrichtung 42 eine Schwenkachse 131 für die hintere Mähdreschereinheit 12 gegenüber der vorderen Mähdreschereinheit 10. Die vorteilhafte Ausgestaltung der Kolbenstangenenden der Lenkzylinder 72 und 74 ermöglicht es, daß sie gemeinsam um dieses Kugelgelenk 110 allseitig schwenken. Zur gleichen Zeit können die Lenkzylinder 72 und 74 untereinander um den Gelenkmittelpunkt 116, und zwar in einer Ebene schwenken, die durch die Schwenkachsen 80, 116 bzw. 80 bis 116 definiert ist. Diese Schwenkbewegung wird durch die vorteilhafte Ausgestaltung der Anschlußelemente 84 und 94 sowie der Arretierungsringe 112 ermöglicht.

Der Rückstellzylinder 132 (Fig. 4) weist endseitig Kugelgelenke auf, wobei das eine Kugelgelenk zwischen den Bohrungen 64 der Deichsel 54 aufgenommen ist und das andere Kugelgelenk mit dem Rahmenteil 44 (Fig. 2) derart verbunden ist, daß der zugehörige Gelenkmittelpunkt 134 des Kugelgelenkes auf der Knicklenkerachse 81 und der zugehörige Gelenkmittelpunkt 136 auf der Schwenkachse 131 liegt.

Das in der Zeichnung nicht dargestellte hydraulische System weist eine Pumpe sowie entsprechende Verteilerorgane auf, über die Druckmittel zu den Lenkzylindern 72 und 74 geleitet wird. Durch Betätigen des Lenksystems schwenkt oder dreht sich die hintere Mähdreschereinheit 12 gegenüber der vorderen Mähdreschereinheit 10 um den Gelenkmittelpunkt 69. Das vordere Ende des oberen Lenkers 36 liegt dabei in der gleichen vertikalen Ebene wie der Gelenkmittelpunkt 69, so daß die Hauptlenkbewegung sich um die vertikal verlaufende Achse 138 abspielt, die sich durch den Kupplungsbolzen 46 und die obere Anschlußstelle des Lenkers 36 erstreckt.

In einem weiteren Ausführungsbeispiel (Fig. 3) ist die Anhängevorrichtung 42′ nach hinten geneigt verlaufend angeordnet, so daß die Ebene, die durch die Gelenkmittelpunkte 80, 80′, 69′ und 116 umrissen wird, geneigt verläuft. Die Schwenkachse 131′ liegt auf einer geneigt verlaufenden Ebene, die den Boden im Bereich der Bodenberührungsstelle der Laufräder 30 der hinteren Mähdreschereinheit 12 schneidet.

Wie bereits beschrieben, weisen die unteren Lenker bzw. Kupplungselemente der beiden gelenkig miteinander verbundenen Mähdreschereinheiten 10 und 12 sowie die Anschlußstellen der Anhängevorrichtung 42 sowie der Lenkzylinder 72 und 74 Universalgelenke auf, die bis zu einem bestimmten Grad eine Schwenk- und Drehbewegung gestatten. Die einzelnen Gelenkpunkte liegen alle auf einer gemeinsamen Ebene sowie auf zwei einander schneidenden Schwenkachsen (Knicklenkerachse 81 und Schwenkachse 131), die den Gelenkmittelpunkt 69 schneiden. Die Schwenkbewegung der hinteren Mähdreschereinheit 12 erfolgt nur um die Schwenkachse 131, solange die Lenkzylinder 72 und 74 hydraulisch blockiert sind bzw. der Druckmittelzufluß zu den Lenkzylindern abgesperrt ist. Durch die Schwenkbewegung tritt eine Verkürzung zwischen den Anschlußstellen des oberen Lenkers 36 ein, so daß mittels des oberen Lenkers 36 eine Knickbewegung zwischen der vorderen und der hinteren Mähdreschereinheit eintritt. Diese Schwenk- bzw. Knickbewegung spielt sich um die Knicklenkerachse 81 ab. Solange alle Anschlußpunkte des Lenkzylinders auf der einen oder der anderen der beiden Achsen liegen besteht keine Tendenz für die Lenkzylinder 72, 74 ihre Länge zu verändern. Ferner treten in die Lenkzylinder 72, 74 keine Axialkräfte durch diesen Bewegungsvorgang auf.

Bei einer einfachen Anhängevorrichtung (ohne blockierte Lenkzylinder) verläuft die natürliche Schwenkachse durch die Bodenberührungsstelle der hinteren Räder (siehe Schnittpunktstelle der Schwenkachse 131′ gemäß Fig. 3). Liegt jedoch die Ebene, die durch die Anschlußpunkte der Anhängevorrichtung und der Lenkzylinder verläuft, in beträchtlichem Maße über dem Boden, so kann beobachtet werden, daß die Schwenkbewegungen, die durch die Unebenheit des Bodens hervorgerufen werden, dazu führen, daß die Anhängevorrichtung 42′ der hinteren Mähdreschereinheit 12 gegenüber der vorderen Mähdreschereinheit 10 schwenkt. Bei Verwendung der unter Druck stehenden Lenkzylinder läuft die Schwenkbewegung um die Schwenkachse 131 (die in etwa parallel zur Bodenoberfläche gemäß Fig. 1 verläuft). Wenn die Schwenkbewegung aufgrund des Lenkvorganges eintritt, so unterliegen die Lenkzylinder 72, 74 dem Einfluß des hydraulischen Druckmittelsystems und die Schwenkbewegung sowie die Knickbewegung ruft keine geometrische Veränderung am Anhänge- oder am Lenksystems hervor, so daß die Lenkstabilität auch bei Fahrten über unebenem Boden beibehalten wird.

Im Ausführungsbeispiel gemäß Fig. 3 sind die Anschlußpunkte der Anhängevorrichtung 42′ und der Lenkzylinder 72′, 74′ so angeordnet, daß sie alle auf einer Ebene liegen, so daß die Schwenkachse 131' mit der natürlichen Schwenkachse übereinstimmt, so daß die Lenk- und Fahreigenschaften im wesentlichen mit denen des Fahrzeuges gemäß Fig. 1 übereinstimmen und gleichzeitig die internen Zug- und Druckkräfte auf den Mähdrescherrahmen verringert werden.

**Patentansprüche**

1. Mähdrescher mit zwei über eine Gelenkeinrichtung zur Lenkung des Mähdreschers um mindestens eine in etwa aufrechtstehende (138) und eine horizontal (131) verlaufende Achse schwenkbaren und jeweils auf einem Laufradpaar (20, 30) abgestützten Dresch- und Trenneinheiten (31) sowie einen Sammelbehälter (32) aufweisenden Rahmeneinheiten (44, 28), wobei die Gelenkeinrichtung aus einer die beiden Rahmeneinheiten (44, 28) miteinander verbindenden unteren Anhängevorrichtung (42), einem oberen Lenker sowie mindestens zwei zwischen den Rahmeneinheiten (44, 28) wirkenden Lenkzylindern (72, 74) besteht, die einenends mit Abstand zueinander an die eine Rahmeneinheit (44) gelenkig angeschlossen sind, dadurch gekennzeichnet, daß die Lenkzylinder (72, 74) V-förmig zueinander verlaufend angeordnet und anderenends derart an die andere Rahmeneinheit (28) angeschlossen sind, daß ihre Anschlußstellen ein derart ausgebildetes gemeinsames Gelenk mit einem Gelenkmittelpunkt (116) bilden, daß es von den Längsmittelachsen der Lenkzylinder (72, 74) geschnitten wird.

2. Mähdrescher nach Anspruch 1, dadurch gekennzeichnet, daß das gemeinsame Gelenk der Lenkzylinder (72, 74) an der hinteren Rahmeneinheit (28) als ein oszillierende Bewegungen zwischen der vorderen und der hinteren Rahmeneinheit (44, 28) zulassendes, den Lenkvorgang der Lenkzylinder bei dieser Bewegungsart nicht beeinflussendes Gelenk ausgebildet ist.

3. Mähdrescher nach Anspruch 1, dadurch gekennzeichnet, daß die Gelenkeinrichtung den die beiden Rahmeneinheiten (44, 28) miteinander verbindenden, zumindest eine Relativbewegung zwischen den oberen Teilen der Rahmeneinheiten zulassenden oberen Lenker (36), eine mit Abstand dazu angeordnete, untere, ein räumliches Gelenk (Kugelgelenk 68) aufweisende Anhängevorrichtung (42) und die beiden V-förmig angeordneten Lenkzylinder (72, 74) aufweist, deren Anschlußelemente an der vorderen Rahmeneinheit (44) ebenfalls räumliche Gelenke aufweisen, die jeweils einen Gelenkmittelpunkt (80, 80') haben, wobei diese beiden Gelenkmittelpunkte (80, 80') und der Gelenkmittelpunkt (69) des vorderen Teils der Anhängevorrichtung (42) auf einer gemeinsamen Querebene liegen, durch die eine horizontale Knicklenkerachse (81) derart verläuft, daß bei gegenseitiger Verschwenkung der beiden Mähdreschereinheiten (10, 12) um diese Knicklenkerachse (81) die Lenkzylinder (72, 74) beeinflußt bzw. ein- oder ausgefahren werden.

4. Mähdrescher nach einem oder mehreren der vorhergehenden Ansprüche, dadurch gekennzeichnet, daß der Gelenkeinrichtung ein Rückstellzylinder (132) zugeordnet ist, der über Kugelgelenke einenends an die Anhängevorrichtung (42) und anderenends an einen Rahmenteil der vorderen Rahmeneinheit (44) gelenkig angeschlossen ist.

5. Mähdrescher nach einem oder mehreren der vorhergehenden Ansprüche, dadurch gekennzeichnet, daß die Gelenke (Kugelgelenke 110, Kupplungsbolzen 78) der Lenkzylinder (72, 74) zur Verbindung der Rahmeneinheiten (44, 28) als Kugelgelenke oder als Kardangelenke mit je einem Gelenkmittelpunkt (80, 80', 116) ausgebildet sind, die mit Abstand zum Gelenkmittelpunkt (69) der Anhängevorrichtung (42) angeordnet sind und auf einer horizontalen Schwenkachse (131) bzw. der Knicklenkerachse (81) liegen.

6. Mähdrescher nach einem oder mehreren der vorhergehenden Ansprüche, dadurch gekennzeichnet, daß die Anschlußstelle der Lenkzylinder (72', 74') an der hinteren Rahmeneinheit (28) unterhalb der Anschlußstellen der Lenkzylinder an der vorderen Rahmeneinheit (44) vorgesehen sind und die durch die Lenkzylinder verlaufenden Längsachsen auf einer nach hinten geneigt verlaufenden Ebene (Schwenkachse 131') liegen.

7. Mähdrescher nach Anspruch 6, dadurch gekennzeichnet, daß die durch die Längsachsen der Lenkzylinder (72', 74') geneigt verlaufende Ebene (Schwenkachse 131') die Laufräder (30) der hinteren Rahmeneinheit (28) im Bereich der Bodenberührungsstelle der zugehörigen Laufräder (30) schneidet.

8. Mähdrescher nach einem oder mehreren der vorhergehenden Ansprüche, dadurch gekennzeichnet, daß das gemeinsame Gelenk der beiden Lenkzylinder (72, 74) an der hinteren Rahmeneinheit (28) zumindest teilweise als eine allseitige Bewegung zulassendes räumliches Gelenk ausgebildet ist, dessen Gelenkmittelpunkt (116) auf der gleichen Längsmittelachse liegt wie der Gelenkmittelpunkt (136) der Anhängevorrichtung (42), wobei die Längsmittelachse eine annähernd horizontale Schwenkachse (131) für die vordere bzw. die hintere Mähdreschereinheit (10 bzw. 12') bildet.

9. Mähdrescher nach einem oder mehreren der vorhergehenden Ansprüche, dadurch gekennzeichnet, daß das gemeinsame Gelenk der beiden Lenkzylinder (72, 74) am Querträger (52) der hinteren Rahmeneinheit (28) als Kugelgelenk ausgebildet ist und von zwei zusammenfügbaren Lagerschalenhälften (108) umgeben wird, die in einer Bohrung (86) eines Lagerringes (84) aufgenommen sind, dessen Bohrungsachse koaxial zu einer Bohrung (100) eines Gabelgelenkes (94) und rechtwinklig zu den Längsachsen der Lenkzylinder (72, 74) verläuft.

10. Mähdrescher nach Anspruch 9, dadurch gekennzeichnet, daß das Gabelgelenk (94) an dem einen Lenkzylinder (74) und der Lagerring (84) an dem anderen Lenkzylinder (72) lösbar angeschlossen ist.

11. Mähdrescher nach den Ansprüchen 9 und 10, dadurch gekennzeichnet, daß das Gabelgelenk (94) aus zwei mit Abstand zueinander angeordneten, koaxial zueinander verlaufenden, Bohrungen (100) aufweisenden Lagerringen (98) besteht, in deren Zwischenraum (Spalt 96) der Lagerring (84) konzentrisch aufgenommen ist, wobei die Bohrungen (100) der Lagerringe (98) etwas größer sind als die eine Bohrung (86) des in den Zwischenraum einschiebbaren Lagerringes (84).

12. Mähdrescher nach den Ansprüchen 9 bis 11, dadurch gekennzeichnet, daß zwei je einen zylindrischen Ansatz (114) aufweisende Arretierungsringe (112) in die beiden Bohrungen (100) des Gabelgelenkes (94) beiderseits des im Zwischenraum des Gabelgelenkes (94) aufgenommenen Lagerringes (84) einsetzbar und über Schraubenbolzen (118) miteinander verbindbar sind.

13. Mähdrescher nach einem oder mehreren der vorhergehenden Ansprüche, dadurch gekennzeichnet, daß die Anhängevorrichtung (42) aus zwei nach hinten divergierend verlaufenden Trägern (48) besteht, die einenends am Querträger (52) der hinteren Rahmeneinheit (28) starr angeschlossen sind und anderenends an ihrem vorderen, zusammenlaufenden Ende eine Deichsel (54) zur Aufnahme eines ein Kugelgelenk (68) aufweisenden Kupplungsbolzens (46) aufweisen, der an einem Rahmenteil der vorderen Rahmeneinheit (44) angeschlossen ist, wobei die nach hinten zusammenlaufenden Lenkzylinder (72, 74) sich durch in den Trägern (48) vorgesehene Langlochöffnungen (50) erstrecken.

**Claims**

1. Combine harvester having two threshing and separating units (31) swingable about at least one substantially perpendicular axis (138) and one horizontally extending axis (131) by means of an articulation system for steering the combine harvester and each supported on a pair of wheels (20, 30) and also having frame units (44, 28) with a storage tank (32), the articulation system consisting of a bottom attachment device (42) connecting the two frame units (44, 28) to one another, a top link and at least two steering cylinders (72, 74) acting between the frame units (44, 28) and which are articulated at one end to one frame unit (44) at a distance from one another, characterised in that the steering cylinders (72, 74) are arranged extending in the form of a V with respect to one another and are connected at the other end to the other frame unit (28) in such manner that their connection points form a common joint with a centre (116) which is so constructed that it is intersected by the longitudinal central axes of the steering cylinders (72, 74).

2. Combine harvester according to claim 1, characterised in that the common joint of the steering cylinders (72, 74) at the rear frame unit (28) is in the form of a joint allowing oscillating movements between the front and the rear frame unit (44, 28) and not affecting the steering action of the steering cylinders during this kind of movement.

3. Combine harvester according to claim 1, characterised in that the articulation system comprises the top link (36) connecting the two frame units (44, 28) to one another and allowing at least a relative movement between the upper parts of the frame units, a bottom attachment device (42) arranged at a distance from the top link and having a three-dimensional joint (ball joint 68), and the two steering cylinders (72, 74) arranged in the form of a V, whose elements connecting them to the front frame unit (44) likewise have three-dimensional joints, each of which has a centre (80, 80'), these two joint centres (80, 80') and the centre (69) of the joint of the front part of the attachment device (42) lying in a common transverse plane through which a horizontal hingeing or bending link axis (81) extends in such manner that on mutual swinging of the two combine harvester units (10, 12) about this hingeing link axis (81) the steering cylinders (72, 74) are affected and contracted or extended.

4. Combine harvester according to one or more of the preceding claims, characterised in that the articulation system has associated with it a return cylinder (132) which is connected at one end via ball joints to the attachment device (42) and is articulated at the other end to a part of the front frame unit (44).

5. Combine harvester according to one or more of the preceding claims, characterised in that the joints (ball joints 110, coupling pins 78) of the steering cylinders (72, 74) for connecting the frame units (44, 28) are in the form of ball joints or of universal joints each having a centre (80, 80', 116) which are arranged at a distance from the centre (69) of the joint of the attachment device (42) and are located on a horizontal swing axis (131) or the hingeing link axis (81).

6. Combine harvester according to one or more of the preceding claims, characterised in that the point of connection of the steering cylinders (72', 74') to the rear frame unit (28) is arranged below the points of connection of the steering cylinders to the front frame unit (44) and the longitudinal axes extending through the steering cylinders are located in a rearwardly inclined plane (swing axis 131').

7. Combine harvester according to claim 6, characterised in that the plane (swing axis 131') extending at an incline through the longitudinal axes of the steering cylinders (72', 74') intersects the wheels (30) of the rear frame unit (28) in the region of the points of contact of the associated wheels (30) with the ground.

8. Combine harvester according to one or more of the preceding claims, characterised in that the common joint of the two steering cylinders (72, 74) at the rear frame unit (28) is at least partly in the form of a three-dimensional joint allowing all-round movement, whose centre (116) is located on the same longitudinal central axis as the centre (136) of the joint of the attachment device (42), the longitudinal central axis forming an approximately horizontal swing axis (131) for the front or the rear combine harvester unit (10 or 12).

9. Combine harvester according to one or more of the preceding claims, characterised in that the common joint of the two steering cylinders (72, 74) at the cross member (52) of the rear frame unit (28) is in the form of a ball joint and is surrounded by two combinable bearing halves (108) which are accommodated in a bore (86) of a bearing ring (84), the axis of whose bore extends coaxially with a bore (100) of a forked link (94) and at right angles to the longitudinal axes of the steering cylinders (72, 74).

10. Combine harvester according to claim 9, characterised in that the forked link (94) is connected detachably to one steering cylinder (74) and the bearing ring (84) is connected detachably to the other steering cylinder (72).

11. Combine harvester according to claims 9 and 10, characterised in that the forked link (94) consists of two bearing rings (98) arranged at a distance from one another and having bores (100) extending coaxially with one another and the bearing ring (84) is accommodated concentrically in the interspace (gap 96) of the said bearing rings (98), the bores (100) of the bearing rings (98) being a little larger than the single bore (86) of the bearing ring (84) insertable in the interspace.

12. Combine harvester according to claims 9 to 11, characterised in that two locking rings (112) each having a cylindrical shoulder (114) can be inserted in the two bores (100) of the forked link (94) on both sides of the bearing ring (84) accommodated in the interspace of the forked link (94) and can be connected to one another by means of threaded bolts (118).

13. Combine harvester according to one or more of the preceding claims, characterised in that the attachment device (42) consists of two beams (48) diverging towards the rear which are rigidly connected at one end to the cross member (52) of the rear frame unit (28) and have at their other, front, converging end a pole (54) for receiving a coupling pin (46) having a ball joint (68) and which is connected to a part of the frame of the front frame unit (44), the steering cylinders (72, 74) converging towards the rear extending through oblong openings (50) provided in the beams (48).

**Revendications**

1. Moissonneuse-batteuse comportant deux parties de châssis (44, 28) pouvant pivoter grâce à un dispositif d'articulation pour diriger la moissonneuse-batteuse autour d'au moins un axe sensiblement vertical (138) et un axe horizontal (131) et comportant chacune des ensembles de battage et de séparation (31) s'appuyant sur une paire de roues de roulement ou porteuses (20, 30), ainsi qu'un réceptacle collecteur ou réservoir-trémie (32), le dispositif d'articulation étant constitué par un dispositif d'attelage inférieur (42) reliant les deux parties de châssis (44, 28) entre elles, une bielle de direction supérieure, ainsi qu'au moins deux vérins de direction (72, 74) agissant entre les parties de châssis (44, 28), qui sont articulés à une extrémité à distance mutuelle à l'une des parties (44) du châssis, caractérisée en ce que les vérins de direction (72, 74) sont disposés en V l'un par rapport à l'autre et sont articulés à l'autre extrémité à l'autre partie de châssis (28) de telle façon que leurs points d'articulation forment une articulation commune avec un centre d'articulation (116), conformé de telle façon que les axes longitudinaux médians des vérins de direction (72, 74) passent par ce centre.

2. Moissonneuse-batteuse suivant la revendication 1, caractérisée en ce que l'articulation commune des vérins de direction (72, 74) à la partie de châssis postérieure (28) est réalisée sous la forme d'une articulation permettant des mouvements oscillants entre la partie de châssis antérieure (44) et la partie de châssis postérieure (28), n'influençant pas le processus de braquage des vérins de direction pour ce type de mouvement.

3. Moissonneuse-batteuse suivant la revendication 1, caractérisée en ce que le dispositif d'articulation comporte la bielle de direction supérieure (36) reliant entre elles les deux parties de châssis (44, 28), permettant au moins un déplacement relatif entre les zones supérieures des parties de châssis, un dispositif d'attelage inférieur (42) écarté de la bielle précitée, comportant une articulation universelle (articulation à rotule 68) et les deux vérins de direction (72, 74) disposés en forme de V, dont les éléments de raccordement à la partie de châssis avant (44) comportent de même des articulations universelles qui présentent chaque fois un centre d'articulation (80, 80'), les deux centres d'articulation (80, 80') et le centre d'articulation (69) de la partie avant du dispositif d'attelage (42) se trouvant dans un plan transversal commun par lequel un axe d'articulation ou de pliage horizontal (81) passe de telle sorte que, lors d'un pivotement relatif des deux parties (10, 12) de la moissonneuse-batteuse autour de l'axe de pliage ou d'articulation (81), les vérins de direction (72, 74) soient influencés ou subissent un mouvement de rentrée ou de sortie.

4. Moissonneuse-batteuse suivant l'une quelconque des revendications précédentes, caractérisée en ce qu'il est prévu, en combinaison avec le dispositif d'articulation un vérin de rappel (132) qui est raccordé à articulation par des articulations à rotule, par une extrémité au dispositif d'attelage (42), et par l'autre extrémité à un élément de châssis de la partie de châssis avant (44).

5. Moissonneuse-batteuse suivant l'une quelconque des revendications précédentes, caractérisée en ce que les articulations (articulations à rotule 110, broches d'accouplement 78) des vérins de direction (72, 74) servant à établir une liaison entre les parties de châssis (44, 28) sont agencées à la manière d'articulations à rotule ou d'articulations à cardan, chacune avec un centre d'articulation (80, 80', 116) qui sont écartés du centre d'articulation (69) du dispositif d'attelage (42) et qui se trouvent sur un axe de pivotement horizontal (131) ou sur l'axe de pliage ou d'articulation (81).

6. Moissonneuse-batteuse suivant l'une quelconque des revendications précédentes, caractérisée en ce que le point de raccordement des vérins de direction (72', 74') à la partie de châssis arrière (28) est prévu au-dessous des points de raccordement des vérins de direction à la partie de châssis avant (44), et en ce que les axes longitudinaux passant par les vérins de direction se trouvent dans un plan incliné vers l'arrière (axe de pivotement 131').

7. Moissonneuse-batteuse suivant la revendication 6, caractérisée en ce que le plan incliné passant par les axes longitudinaux des vérins de direction (72', 74') (axe de pivotement 131') coupe les roues porteuses (30) de la partie de châssis arrière (28) au voisinage du point de contact avec le sol des roues porteuses correspondantes (30).

8. Moissonneuse-batteuse suivant l'une quelconque des revendications précédentes, caractérisée en ce que l'articulation commune des deux vérins de direction (72, 74) sur la partie de châssis arrière (28) se présente au moins en partie sous la forme d'une articulation universelle autorisant des déplacements dans toutes les directions, dont le centre d'articulation (116) se trouve sur le même axe longitudinal médian que le centre d'articulation (136) du dispositif d'attelage (42), l'axe longitudinal médian formant un axe de pivotement sensiblement horizontal (131) pour la partie de moissonneuse-batteuse avant ou la partie de moissonneuse-batteuse arrière (10, 12').

9. Moissonneuse-batteuse suivant l'une quelconque des revendications précédentes, caractérisée en ce que l'articulation commune des deux vérins de direction (72, 74) sur la traverse (52) de la partie de châssis arrière (28) se présente sous la forme d'une articulation à rotule et est entourée par deux demi-coquilles (108) pouvant être assemblées, qui sont logées dans un perçage (86) d'une bague de portée (84) dont l'axe du perçage s'étend coaxialement à un perçage (100) d'une articulation à chape (94) et perpendiculairement aux axes longitudinaux des vérins de direction (72, 74).

10. Moissonneuse-batteuse suivant la revendication 9, caractérisée en ce que l'articulation à chape (94) est raccordée amoviblement à l'un des vérins de direction (74), tandis que la bague de portée (84) est reliée amoviblement à l'autre vérin de direction (72).

11. Moissonneuse-batteuse suivant les revendications 9 et 10, caractérisée en ce que l'articulation à chape (94) est constituée par deux anneaux (98) disposés à une certaine distance l'un de l'autre, s'étendant coaxialement entre eux et présentant des perçages (100), la bague de portée (84) étant reçue concentriquement dans l'intervalle (intervalle 96) formé entre les anneaux (98), les perçages (100) des anneaux (98) étant un peu plus grands que le perçage (86) de la bague (84) pouvant être engagée dans l'intervalle ainsi formé.

12. Moissonneuse-batteuse suivant l'une quelconque des revendications 9 à 11, caractérisée en ce que deux bagues de blocage (112) présentant chacune une protubérance ou collerette cylindrique (114) peuvent être insérées dans les deux perçages (100) de l'articulation à chape (94) de part et d'autre de la bague (84) logée dans l'intervalle ménagé par la chape d'articulation (94) et peuvent être reliées entre elles par des vis ou boulons (118).

13. Moissonneuse-batteuse suivant l'une quelconque des revendications précédentes, caractérisée en ce que le dispositif d'attelage (42) est constitué par deux supports (48) s'étendant en divergeant en direction de l'arrière, qui sont raccordés rigidement par une extrémité à la traverse (52) de la partie de châssis arrière (28) et dont les extrémités avant convergentes comportent un timon ou une barre d'attelage (54) pour la réception d'une broche d'accouplement (46) présentant une articulation à rotule (68), qui est raccordée à un élément de châssis de la partie de châssis avant (44), les vérins de direction (72, 74) allant en convergeant vers l'arrière s'étendant à travers des orifices en forme de fentes (50) prévus dans les supports (48).

FIG. 1

FIG. 2

FIG. 3

FIG. 4

0 089 628

FIG. 5

FIG. 6